Europäisches Patentamt

(19) European Patent Office

Office européen des brevets

(11) Publication number: **0 230 003**
**B1**

# EUROPEAN PATENT SPECIFICATION

(45) Date of publication of the patent specification:
**11.07.90**

(21) Application number: **86117509.9**

(22) Date of filing: **16.12.86**

(51) Int. Cl.⁵: **C08G 18/40,** C08G 18/64,
C09D 101/18, C09D 133/14

(54) **Nitrocellulose-urethane traffic paint.**

(30) Priority: **27.12.85 US 813908**

(43) Date of publication of application:
**29.07.87 Bulletin 87/31**

(45) Publication of the grant of the patent:
**11.07.90 Bulletin 90/28**

(84) Designated Contracting States:
**DE FR GB**

(56) References cited:
**DE-A- 2 640 047**
**FR-A- 2 193 361**
**US-A- 4 284 751**

(73) Proprietor: **HERCULES INCORPORATED, Hercules
Plaza, Wilmington Delaware 19894(US)**

(72) Inventor: **Winchester, Charles Mirack, Chesterville Road
P.O. Box 67, Landenberg Chester County,
Pennsylvania(US)**

(74) Representative: **Lederer, Franz, Dr. et al, Van der Werth,
Lederer & Riederer Patentanwälte
Lucile-Grahn-Strasse 22, D-8000 München 80(DE)**

ACTORUM AG

## Description

This invention relates to the use of nitrocellulose-urethane paint compositions.

Urethane coatings have long been used for exterior applications where high durability is required, such as for bridge paints, and aircraft finishes, and they have been proposed for road markings.

Urethane coatings are formed by the reaction of isocyanate and polyol components. Commercially available nitrocellulose contains free hydroxyl groups that can react with resins containing isocyanate groups to form urethane linkages. Nitrocellulose/urethane coatings are well-known for furniture finishes and have been proposed for use in pigmented aircraft finishes.

Highly durable nitrocellulose/urethane lacquers as two-part compositions are described in Hercules Incorporated Technical Information Bulletin CSL-202E, issued in May of 1984. They contain, as an additional polyol component, any reactive modifying resin that has free hydroxyl functionality, and are described as suitable for finishing wood or metal surfaces, with a typical drying time of 20 to 30 minutes for a 50 micrometer unpigmented film. A plasticizer may not be required, but if used it must have free hydroxyl functionality to react with the isocyanate content. The modifying resins may be modified polyols such as hydroxy acrylic polyols.

However, nitrocellulose/urethane coatings have not been used as traffic paints because the known formulations normally used would remain wet too long (because of slow solvent release) a problem that has also caused difficulty with both conventional polyester and epoxy liquid compositions and urethane coatings, as described for instance, in U.S. Patent 3 474 057, which attempts to overcome the problem by preheating urethane coatings to a temperature of from 60 to 126°C.

The DE-A 2 640 047 describes paints and lacquers for surfaces such as metals, wood, glass and fingernails. The cured paints described therein are said to be capable of being handled 5 minutes after being applied to the substrate.

Traffic marking paints are classified by "auto-no-track-time", defined as the period of time after which a passenger car can pass over a freshly applied pigmented marking layer 150 to 230 micrometers thick without "tracking", i.e., without pick-up of material by a tire and redeposition of the material on the road surface with subsequent revolutions.

Paints with a 90 second or less auto-n-track-time are preferred because they do not require placing barriers (such as so-called "traffic cones", the use of which is called "coning") on the road to prevent motorists from driving over the wet paint. The placing and retrieval of such barriers is costly and hazardous to the personnel handling the barriers.

Paints which do not require "coning" are usually solvent-based and comprised of alkyd or chlorinated rubber vehicles. Under severe service conditions, however, such materials normally have a useful life of six months or less. More durable marking materials usually are solventless systems and are based on polyester or epoxy resins, or hydrocarbon or rosin ester thermoplastic materials. Their service life when properly applied can approach three or more years.

However, polyester and epoxy liquid compositions have auto-no-track-times of 8–10 minutes, respectively, and therefore require "coning". Thermoplastic hydrocarbon or rosin ester coatings dry quickly by cooling but become soft in hot weather and require expensive application equipment. A heavy application of glass beads [9–11 kg per liter (20–25 ounds per gallon) versus a normal 2.4–3.0 kg per liter (6–8 pounds per gallon) of paint applied] may be used with epoxy resins to eliminate the use of barriers, but that significantly increases the cost.

It would be desirable to make available a paint composition that is solvent-based and has the durability provided by formulation with a nitrocellulose-urethane vehicle, while having a drying time short enough to permit its use as a traffic paint for which "coning" would not be required.

According to the invention, a solvent-based nitrocellulose-urethane paint composition that comprises the combination of a pigment, a solvent, a binder, and optionally a catalyst, that is the reactive mixture of nitrocellulose, an isocyanate resin and a modifier containing –OH functional groups, wherein the modifier is a hydroxyacrylic resin, and optionally also contains a plasticizer containing –OH functional groups, is used as a traffic marking paint.

These solvent-based paint compositions, in which the nitrocellulose is used as a part of the polyol component of the urethane vehicle, and the hydroxyacrylic polyol modifier provides additional reactive –OH functional groups, have a 90 second or less auto-no-track-time and high durability, and therefore are particularly suitable for use as traffic marking paints.

It is assumed that the non-polar character of the polymeric hydroxyalkyl(meth)acrylate facilitates the rapid release of the polar solvents (such as esters and ketones) used for nitrocellulose-urethane paint compositions, which tend to be retained by polar polymers.

Suitable hydroxyacrylic polyol modifiers include those commercially identified as follows: ®Acryloid AU-568 AU-608, and QR946 (sold by Rohm and Haas Company); ®Degalan VP-LS 50, VP-LS 73, and VP-LS 102 (available from Degussa Corporation; and ®Lumitol H66, H80F, and H135, sold by BASF AG.

Preferably, the hydroxyfunctional modifiers are copolymers of hydroxyethyl acrylate or methacrylate with an alkyl acrylate or methacrylate such as the methyl, ethyl or butyl derivative. In general the higher the molecular weight of the hydroxyacrylic resins (normally having molecular weights in the order of about 1000) provide harder, more brittle films. It may be advantageous to use a mixture of two or more hydroxyacrylic polyol modifiers.

Lower molecular weight hydroxyacrylic resins act as plasticizers and give softer, more flexible films, and higher coatings solids. Other plasticizers that may be used are conventionally used in lacquer formulations to achieve a desirable degree of film flexibility, but only those that have reactive –OH functional groups, such as castor oil-azelaic acid alkyd and polyethers derived from propylene glycol. Suitable polymeric plasticizers, identified as Paraplex RG-2 and RGA-2, are available from Rohm and Haas.

Although nitrocellulose is compatible with both aromatic and aliphatic isocyanate resins, the aliphatic resins are usually preferred over aromatic isocyanate resins for exterior applications because the aromatic resins yellow upon exposure to ultraviolet light. However, requirements for color stability in traffic paints are not as stringent as in other exterior applications, so combinations of aliphatic isocyanate resins with the aromatic resins (which are cheaper and cure faster than the aliphatic resins) may be used.

Suitable aliphatic isocyanate resins include hexamethylene diisocyanate biurets, trimers of hexamethylene diisocyanate, and isophorone diisocyanate trimers.

Suitable aromatic isocyanate resins include trimers of toluene diisocyanate, adducts of toluene diisocyanate with polyols such as trimethyl propane, and diphenyl methane diisocyanate resins.

Nitrocellulose useful in the paint compositions to be used according to this invention has an average nitrogen content of 10.7 to 12.2%. Preferred viscosity grades of nitrocellulose, as measured by the falling-ball method at 25°C, are those identified as "1/4 second", "1/2 second" and "5–6 second". The higher viscosity grades, such as 1/2 sec or 5–6 sec, give coatings with lower solids contents and thinner dry film thicknesses for the same wet film thickness when applied. The lower viscosity grades, which for instance may have viscosity values of 30–35 mPas and 18–25 mPas and supply more solids in the dry film, give longer no-track-times. An exceptionally low viscosity grade (5 mPas) gives a much longer no-track-time.

Urethane grade nitrocellulose (toluene-wet nitrocellulose with a maximum water content of 3%) as well as toluene-wet nitrocellulose with a maximum water content of 4%, or alcohol-wet nitrocellulose, can be used in the paint compositions.

Suitable and preferred ranges for the components of the nitrocellulose-urethane vehicle of the paint composition are give below.

| | Molar Equivalents | |
| --- | --- | --- |
| | Suitable | Preferred |
| Nitrocellulose | 0.2–1.0 OH | 0.5–0.9 OH |
| Hydroxyacrylic polyol modifier resin | >0–0.8 OH | >0–0.5 OH |
| Hydroxyfunctional plasticizer | 0–0.4 OH | 0–0.3 OH |
| Isocyanate resin | 0.75–1.25 NCO | 0.85–1.15 NCO |
| Ratio NCO/OH | 0.75/1.0 to 1.15/1.0 | 0.85/1.0 to 1.0/1.0 |

The paint compositions to be used according to this invention are typically formulated to maintain molar equivalents of isocyanate and hydroxyl group functionality or a slight excess of hydroxyl to ensure complete reaction of the isocyanate groups. Ratios with an excess of isocyanate exhibit slower drying rates.

A catalyst is preferably used to promote the reaction between the isocyanate and hydroxyl groups, particularly when the paint is applied to cold road surfaces. Any catalyst conventionally used in urethane coating systems, such as bismuth 2-ethyl hexanoate or dibutyl tin dilaurate, may be used. Bismuth 2-ethyl hexanoate is preferred. Zinc, tin and cobald driers are also effective. The catalyst does not appear to affect the no-pick-up-time.

Any conventional pigment, or combination of pigments, suitable for traffic marking paints may be used. A combination of calcium carbonate, talc and titanium dioxide is preferred for the white paints of the present invention. If yellow paints are desired, yellow pigments such as diarylide yellow toner or lead chromate may be used.

The paint compositions to be used according to this invention may be formulated at a pigment volume concentration (PVC) between about 15 and what is conventionally known as "the critical PVC" of the composition. The critical PVC is defined as that level of pigmentation in the dry paint where just sufficient binder is present to fill the voids between the pigment particles. Above the critical PVC there is a rapid fall-off in durability. A PVC of about 40 is preferred. For a given vehicle system the higher the PVC, the faster the dry and the higher the solids.

Polar solvents from which moisture, acids, alcohols, amines and all materials containing reactive hydrogen have been eliminated are used in the paint vehicle. Esters such as ethyl or butyl acetate and ketones may be used. Methyl ethyl ketone is the preferred solvent.

The presence of the solvent in solvent-based nitrocellulose-urethane paint compositions provides better wetting of the road surface with varying types and degrees of contamination (such as dirt, oil, ethylene, glycol, rubber). This improved wetting of the road surface eliminates the necessity for the application of a primer or precleaning of the road surface, steps that are required when using some conventional marking materials.

The paint compositions to be used according to this invention can be formulated for use in either single-stream or two-stream equipment and for both airless and air-assisted application. The compositions can be applied at ambient temperature or may be heated before application to a temperature above ambient temperature and below the temperature at which the paint decomposes, before application to the roadway surface. Two-stream equipment is preferred. Heating before application will reduce the auto-no-track time.

If single-stream equipment is used, the polyol component containing the pigment, the isocyanate resin component and the catalyst component are stored separately and are not mixed until shortly before application of the composition to the roadway.

If two-stream equipment is used, the polyol component, which also contains the pigment and catalyst, and the isocyanate resin component are stored in separate containers until use. The two components do not mix until they reach the application nozzle.

In either case it may be advantageous to add an antisettling agent to the polyol component. The antisettling agent keeps the pigment in suspension when the polyol component is stored for an extended period of time before use.

After the paint compositions are sprayed onto the road surface, glass beads or spheres can be immediately dropped onto the paint while it is still tacky so that the beads become partially embedded in the paint. The resulting line is immediately retroflective.

Conventional application equipment includes a spray head for the paint composition having a glass bead dispensing device associated therewith and positioned just behind the paint spray head. The glass bead dispensing device is coordinated with the paint spray head to supply glass beads to the freshly applied, undried paint line passing under the glass bead dispenser, or to intermix the paint and glass just before or as the paint hits the road surface.

Durability Comparison

This series of tests illustrates the durability of the nitrocellulose-urethane traffic paints as measured by maintenance of "retroreflectance". All parts and percentages are by weight unless otherwise specified.

In these tests, the nitrocellulose contributes 0.35 equivalent OH, the hydroxyfunctional resin 0.39 equivalent OH, the hydroxyfunctional plasticizer 0.26 equivalent OH and the isocyanate resin 1.11 equivalents NCO to the paint vehicle. The pigment volume concentration is 40.

| Component A | Weight % |
|---|---|
| Saturated polyester resin with an average equivalent weight of 522 OH, a viscosity of 2400–7000 mPas at 25°C, 75% solids in ethyl glycol acetate | 9.36 |
| Castor oil-azelaic acid alkyd with an equivalent weight of 807 OH, a viscosity of 625 mPas at 25°C, 60% solids in toluene | 9.68 |
| Methyl ethyl ketone | 13.76 |
| Nitrocellulose with 11.8–12.2% nitrogen, an approximate equivalent weight of 594 OH, a viscosity of 4–5 seconds at 25°C (measured at 25% solids in a mixture of 25 wt% denatured ethyl alcohol, 55% toluene and 20% ethyl acetate as the solvent, ASTM D301–72), 60% solids wet with toluene | 9.68 |
| Calcium carbonate | 13.90 |
| Talc | 16.77 |
| Methyl ethyl ketone | 7.68 |
| Titanium dioxide | 19.17 |
| | 100.00 |

The first three ingredients are combined, and the nitrocellulose is added slowly with slow mixing. The mixing is continued until the nitrocellulose is dissolved. The calcium carbonate and talc are dispersed in the nitrocellulose solution using a high speed disperser. After the remaining methyl ethyl ketone is added, the titanium dioxide is also dispersed at high speed.

| Component B | Weight % |
|---|---|
| Hexamethylene diisocyanate biuret with an average equivalent weight of 255 NCO, a viscosity of 11,500 mPas at 20°C, 75% solids in a 1/1 mixture of butyl acetate/xylene as the solvent | 76.6 |
| Methyl ethyl ketone | 23.4 |
| | 100.00 |

| Component C | Weight % |
|---|---|
| Dibutyl tin dilaurate | 10.0 |
| Methyl ethyl ketone | 90.0 |
| | 100.00 |

Components A (polyol plus pigment), B (isocyanate resin), and C (catalyst) are stored separately until use. Immediately before application the following mix is made:

| | |
|---|---|
| Component A | 10,943 gms |
| Component B | 1,883 gms |
| Component C | 15.74 gms |
| | 12,841.74 gms |

The paint is applied at ambient temperature to a Portland cement concrete highway at 0.4 mm (15 mils) wet film thickness using conventional one stream spray equipment for traffic paint. This application was part of a road test conducted by a state highway department in accordance with ASTM D-713, Standard Practice for Conducting Road Service Tests on Traffic Paint.

The results of this road test are shown in Table 1 in which A is a solvent-based nitrocellulose-urethane paint composition that is formulated according to the invention, except that the modifier is a conventional modifier for nitrocellulose-urethane lacquers (to extend the drying time for comparison, emphasizing the durability of nitrocellulose-urethane, with the conventional traffic paint compositions); B is a chlorinated rubber paint conforming to New Jersey Department of Transportation specifications for Type IV traffic paint (this paint is recognized throughout the industry as the most durable traffic paint currently available); C and D meet Commonwealth of Pennsylvania specifications, including a 90-second auto-no-track-time; and E meets the specifications of the State of South Carolina, including a 60-second auto-no-track-time.

The test results are presented for a comparison of the durability of various types of traffic paint compositions. None of the compositions falls within the scope of the claims.

Table 1

| Weeks Exposure | Retroreflectance (%)* | | | | |
|---|---|---|---|---|---|
| | A | B | C | D | E |
| 0 | 94.9 | 82.6 | 94.0 | 98.5 | 83.0 |
| 4 | 87.3 | 66.4 | 69.5 | 69.5 | 60.8 |
| 16 | 69.9 | 59.4 | 58.8 | 57.6 | 38.5 |
| 20 | 85.6 | 69.8 | 65.1 | 56.3 | 34.9 |
| 27 | 60.4 | 41.2 | 25.1 | 21.9 | 20.9 |
| 34 | 51.1 | 34.4 | 20.6 | 18.8 | 19.0 |

* Values given in the table represent the percent of the standard as measured with a "Michigan" retroreflectometer.

The following examples illustrate the invention and are not intended to limit its scope in any way. All parts and percentages are by weight unless otherwise specified.

Example 1 (1A and 1C (with comparisons 1B and 1D))

This example illustrates the efficacy of nitrocellulose in reducing the drying time of the traffic paint compositions.

In the following formulations labeled 1A and 1C, the nitrocellulose provides 0.5 equivalent OH, the hydroxyacrylic resin provides 0.3 equivalent OH, the hydroxyfunctional plasticizer 0.2 equivalent OH, and the isocyanate resin 1.0 equivalent NCO. In fomulations 1B and 1D, the nitrocellulose in formulations 1A and 1C has been replaced by additional hydroxyacrylic resin on an equivalent basis. Hence, 1B and 1D each contain 0.8 equivalent OH of hydroxyacrylic resin, 0.2 equivalent OH of hydroxyfunctional plasticizer and 1.0 equivalent NCO of isocyanate resin. All of the formulations have a pigment volume concentration of 40.

| | Weight % | | | |
| --- | --- | --- | --- | --- |
| | 1A | 1B | 1C | 1D |
| Nitrocellulose (same as in "Durability Comparison") | 11.30 | — | 11.94 | — |
| Hydroxyacrylic resin "X" (1) | 11.53 | 24.47 | — | — |
| Hydroxyacrylic resin "Y" (2) | — | — | 10.15 | 23.04 |
| Hydroxyfunctional plasticizer (3) | 3.63 | 2.90 | 3.83 | 3.28 |
| Methyl ethyl ketone | 23.79 | 23.14 | 24.09 | 23.71 |
| Calcium carbonate | 11.78 | 12.12 | 11.73 | 12.03 |
| Talc | 14.23 | 14.64 | 14.18 | 14.54 |
| Titanium dioxide | 16.27 | 16.72 | 16.20 | 16.62 |
| Catalyst solution (4) | .24 | .24 | .24 | .24 |
| Isocyanate resin (5) | 7.23 | 5.77 | 7.64 | 6.54 |
| TOTAL | 100.00 | 100.00 | 100.00 | 100.00 |

(1) Hydroxyacrylic resin "X" has an equivalent weight of 1032 OH, a viscosity of 6000 mPas at 25°C, 28% solids in xylene. (2) Hydroxyacrylic resin "Y" has an equivalent weight of 833 OH, 5000 mPa's dynamic viscosity at 20°C, 60% solids in a 4/1 mixture of xylene/butyl acetate as the solvent. (3) The hydroxyfunctional plasticizer is a castor oil-azelaic acid alkyd with an equialent weight of 484 OH, a viscosity of approximately 70,000 mPas at 23°C, 100% solids. (4) The catalyst solution is bismuth 2-ethyl hexoate, 8.2% metal as supplied, 10% solution in methyl ethyl ketone. (5) The isocyanate resin is a hexamethylene diisocyanate biuret with an average equivalent weight of 191 NCO, a viscosity of 11,500 ± 3,500 mPa's at 20°C, 100% solids.

Each mix is made in a container with glass beads as a grinding medium. The polyol portion of each is tumbled overnight. The pigments and catalyst are added and the mixes tumbled again overnight to disperse the pigments. The isocyanate resin is added and the containers are agitated for 10 minutes. The resulting paints are immediately separated from the grinding medium and films are cast on a glass plate to give 0.4 mm (15 mils) wet film thickness. No-pick-up-times are determined for each according to ASTM D-711, Method for No-Pick-Up Time of Traffic Paint. This method is a laboratory test for comparing the length of time after application after which would be no-pick-up of traffic marking paint by the tire of an automobile. The results are as follows:

| | ASTM D-711 No-Pick-Up Time, Min. |
| --- | --- |
| "Durability Comparison" | 26 |
| Formula 1A with nitrocellulose | 3 |
| Formula 1B without nitrocellulose | 25 |
| Formula 1C with nitrocellulose | 1 |
| Formula 1D without nitrocellulose | 25 |

Example 2

In this example the nitrocellulose provides 0.5 equivalent OH, the hydroxyacrylic resin 0.3 equivalent OH, the hydroxyfunctional plasticizer 0.2 equivalent OH, and the isocyanate resin 1.0 equivalent NCO. The pigment volume concentration is 40.

| Component A | Weight % |
|---|---|
| Nitrocellulose (same as in "Durability Comparison") | 11.95 |
| Hydroxyacrylic resin "Y" (same as Example 1C and 1D) | 10.16 |
| Hydroxyfunctional plasticizer (same as Example 1) | 3.84 |
| Calcium carbonate | 11.74 |
| Talc | 14.18 |
| Titanium dioxide | 16.21 |
| Catalyst solution (same as Example 1) | .25 |
| Methyl ethyl ketone | 31.67 |
| | 100.00 |

| Component B | Weight % |
|---|---|
| Isocyanate resin (same as Example 1) | 61.30 |
| Methyl ethyl ketone | 38.70 |
| | 100.00 |

In preparing Component A, the nitrocellulose is dissolved in methyl ethyl ketone to form a base solution of about 33% solids. The pigments are dispersed in a blend of the nitrocellulose solution, the hydroxyacrylic resin, the plasticizer, and the catalyst on a high speed disperser. The remaining methyl ethyl ketone is then added.

The paint is applied at ambient temperature at 0.4 mm (15 mils) wet film thickness on a Portland cement concrete highway using conventional spray equipment modified to preblend six parts by volume of Component A (polyol plus pigment and catalyst) from one stream with one part by volume of component B (isocyanate resin) from a second stream. A test conducted in accordance with ASTM D-713, Standard Practice for Conducting Road Service Tests on Traffic Paint, shows this paint to have an auto-no-track-time of less than 90 seconds.

Example 3

In this example the pigment concentration and the OH and NCO equivalents of the various components of the composition are the same as in Example 2. An anti-settling agent is added to Component A and a polyether derived from propylene glycol is used as the hydroxyfunctional plasticizer. A trimer of hexamethylene diisocyanate is used in Component B.

| Component A | Weight % |
|---|---|
| Nitrocellulose (same as in "Durability Comparison") | 12.30 |
| Hydroxyacrylic resin "Y" (same as Example 1C and 1D) | 10.46 |
| Polyoxypropylene derivative of propylene glycol with a molecular weight of 1050, hydroxyl value 107 mg KOH/g, viscosity 150 mPas at 25°C, 100% solids | 4.27 |
| Calcium carbonate | 12.30 |
| Talc | 14.86 |
| Titanium dioxide | 16.98 |
| Antisettling agent – organic derivative of a hydrous silicate mineral, i.e. organoclay | .20 |
| Catalyst (same as Example 1) | .26 |
| Methyl ethyl ketone | 28.37 |
| | 100.00 |

| Component B | Weight % |
|---|---|
| Trimer of hexamethylene diisocyanate with an average equivalent weight of 216 NCO, a viscosity of 700 mPas at 23°C, 90% solids in a 50/50 mixture of "Aromatic 100"/butyl acetate as the solvent | 62.70 |
| Methyl ethyl ketone | 37.30 |
| | 100.00 |

In preparing Component A, the nitrocellulose is dissolved in methyl ethyl ketone to form a base solution of about 33% solids. The pigments and antisettling agent are dispersed in a blend of the nitrocellulose solution, the hydroxyacrylic resin, the plasticizer, and the catalyst on a high speed disperser. The remaining methyl ethyl ketone is then added.

The paint is applied at ambient temperature at 0.4 mm (15 mils) wet film thickness on a Portland cement concrete highway using conventional spray equipment modified to preblend six parts by volume Component A (polyol plus pigment and catalyst) from one stream with one part Component B (isocyanate resin) from a second stream. A test conducted in accordance with ASTM D-713 shows this paint to have an auto-no-track-time of 90 seconds.

("Aromatic 100" is a complex mixture of liquid hydrocarbons sold by Exxon).

Examples 4A and 4B

White traffic paint compositions are prepared as follows. In this example the OH and NCO equivalents contributed by the various components of the composition are the same as in Example 2. An alternative pigmentation for a white traffic paint is illustrated in Example 4A. The pigment volume concentration is 17 for Example 4A and 40 for Example 4B.

| Component A | Weight % | |
|---|---|---|
| | 4A | 4B |
| Nitrocellulose (same as in Durability Comparison) | 16.68 | 11.50 |
| Hydroxyacrylic resin "X" (same as Examples 1A and 1B) | 17.02 | 11.73 |
| Hydroxyfunctional plasticizer (same as Example 1) | 5.35 | 3.69 |
| Calcium carbonate | none | 11.98 |
| Talc | none | 14.48 |
| Titanium dioxide | 24.02 | 16.55 |
| Catalyst solution (same as Example 1) | .36 | .25 |
| Methyl ethyl ketone | 36.57 | 29.82 |
| | 100.00 | 100.00 |

| Component B | Weight % | |
|---|---|---|
| | 4A | 4B |
| Isocyanate resin (same as Example 1) | 73.20 | 63.00 |
| Methyl ethyl ketone | 26.80 | 37.00 |
| | 100.00 | 100.00 |

In preparing Component A the nitrocellulose solution is dissolved in methyl ethyl ketone to form a base solution of about 33% solids. The pigment is dispersed in a blend of the nitrocellulose solution, the hydroxyacrylic resin, the plasticizer, and the catalyst on a high speed disperser. The remaining methyl ethyl ketone is then added.

The paints are applied and compared with the control using the same procedure as in Example 3. Satisfactory auto-no-track times are obtained. A control white paint conforming to New Jersey Type IV specifications applied at ambient paint temperature on the same highway on the same day using conventional spray equipment failed the auto-no-track-time requirement at 180 seconds.

Examples 5A and 5B

Yellow traffic paint compositions are prepared as follows. In this example the pigment volume concentration and the OH and NCO equivalents contributed by the various components of the composition are the same as in Example 2. Example 5A is a lead-free yellow paint composition.

| Component A | Weight % | |
| --- | --- | --- |
| | 5A | 5B |
| Nitrocellulose (same as in Durability Comparison) | 11.68 | 11.40 |
| Hydroxyacrylic resin "X" (same as Examples 1A and 1B) | 11.92 | 11.63 |
| Hydroxyfunctional plasticizer (same as Example 1) | 3.75 | 3.66 |
| Calcium carbonate | 11.33 | 15.80 |
| Talc | 10.25 | 10.51 |
| Titanium dioxide | 15.10 | 10.88 |
| Diarylide yellow toner | 3.43 | none |
| Lead chromate (medium shade) | none | 5.16 |
| Antisettling agent (same as Example 3) | none | .20 |
| Catalyst solution (same as in Example 1) | .25 | .25 |
| Methyl ethyl ketone | 32.29 | 30.51 |
| | 100.00 | 100.00 |

| Component B | Weight % | |
| --- | --- | --- |
| | 5A | 5B |
| Isocyanate resin (same as in Example 1) | 57.50 | 60.97 |
| Methyl ethyl ketone | 42.50 | 39.03 |
| | 100.00 | 100.00 |

The paints are prepared and applied using the same procedure as in Example 4A and 4B. Satisfactory auto-no-track times are obtained.

## Claims

1. Use of a solvent-based nitrocellulose-urethane paint composition comprising the combination of a pigment, a solvent, and a binder that is a reactive mixture of nitrocellulose, a hydroxyacrylic resin as a modifier and an isocyanate resin as traffic marking paint.

2. The use of a composition according to claim 1, wherein the hydroxyacrylic resin is a polymer of a hydroxyalkyl acrylate or methacrylate with an alkyl acrylate or methacrylate.

3. The use of a composition as claimed in claim 1, further characterized in that the modifier also comprises a plasticizer containing —OH functional groups.

4. The use as claimed in claims 1 to 3, further characterized in that the composition also contains a catalyst to promote the reaction between the isocyanate and hydroxyl groups, particularly when the paint is applied to a cold road surface.

5. The use of a paint composition as claimed in claim 3, further characterized in that the plasticizer is a castor oil-azelaic acid alkyd resin or a polyether derived from propylene glycol.

6. The use of a paint composition as claimed in any of the preceding claims, further characterized in that the isocyanate resin is hexamethylene diisocyanate biuret, a trimer of hexamethylene diisocyanate, or a diphenylmethane diisocyanate resin.

7. The use of a paint composition as claimed in any of the preceding claims, further characterized in that the catalyst is bismuth 2-ethyl hexanoate.

8. The use as claimed in any of the preceding claims, further characterized in that the "auto-no-track time" of the composition is 90 seconds or less.

## Patentansprüche

1. Verwendung einer auf einem Lösungsmittel basierenden Nitrozellulose-Urethan Farbzusammensetzung, umfassend die Kombination eines Pigments, eines Lösungsmittels und eines Bindemittels, das eine reaktive Mischung ist und aus Nitrozellulose, einem Hydroxyacrylharz als ein Modifiziermittel und einem Isocyanatharz als Verkehrsmarkierungsfarbe.

2. Verwendung einer Zusammensetzung gemäß Anspruch 1, worin das Hydroxyacrylharz ein Copolymer eines Hydroxyalkylacrylats oder -methacrylats mit einem Alkylacrylat oder -methacrylat ist.

3. Verwendung einer Zusammensetzung nach Anspruch 1, weiter dadurch gekennzeichnet, daß das Modifiziermittel auch einen Weichmacher umfaßt, der funktionelle OH-Gruppen enthält.

4. Verwendung gemäß den Ansprüchen 1 bis 3, weiter dadurch gekennzeichnet, daß die Zusammensetzung auch einen Katalysator zur Förderung der Reaktion zwischen den Isocyanat- und Hydroxylgruppen enthält, insbesondere wenn die Farbe auf eine kalte Straßenoberfläche aufgetragen wird.

5. Verwendung einer Farbzusammensetzung nach Anspruch 3, weiter dadurch gekennzeichnet, daß der Weichmacher ein Rizinusöl-Azelainsäure-Alkydharz oder ein Polyether abgeleitet von Propylenglykol ist.

6. Verwendung einer Farbzusammensetzung nach einem der vorhergehenden Ansprüche, weiter dadurch gekennzeichnet, daß das Isocyanatharz Hexamethylen-Diisocyanat-Biuret, ein Trimer von Hexamethylen-Diisocyanat oder ein Diphenylmethan-Diisocyanat-Harz ist.

7. Verwendung einer Farbzusammensetzung nach einem der vorhergehenden Ansprüche, weiter dadurch gekennzeichnet, daß der Katalysator Bismuth-2-ethyl-hexanoat ist.

8. Verwendung nach einem der vorhergehenden Ansprüche, weiter dadurch gekennzeichnet, daß die "Zeit nach der keine Verschmierung durch ein Auto erfolgt" der Zusammensetzung weniger als 90 Sekunden beträgt.

**Revendications**

1. Utilisation, comme peinture de signalisation horizontale, d'une composition de peinture de nitrocellulose/uréthane à base de solvant, comprenant la combinaison d'un pigment, d'un solvant et d'un liant qui est un mélange réacif de nitrocellulose, d'une résine hydroxyacrylique servant de modificateur et d'une résine d'isocyanate.

2. Utilisation d'une composition selon la revendication 1, dans laqulle la résine hydroxyacrylique est un copolymère d'un acrylate ou méthacrylate d'hydroxyalkyle avec un acrylate ou méthacrylate d'alkyle.

3. Utilisation d'une composition selon la revendication 1, caractérisée en outre en ce que le modificateur comprend aussi un plastifiant contenant des groupements fonctionnels –OH.

4. Utilisation selon l'une quelconque des revendications 1 à 3, caractérisée en outre en ce que la composition contient aussi un catalyseur destiné à accélérer la réaction entre les groupements isocyanate et hydroxyle, en particulier lorsque la peinture est appliquée sur une surface de chaussée froide.

5. Utilisation d'une composition de peinture selon la revendication 3, caractérisée en outre en ce que le plastifiant est une résine alkyde huile de ricin/acide azelaïque ou un polyéther dérivé du propylèneglycol.

6. Utilisation d'une composition de peinture selon l'une quelconque des revendications 1 à 5, caractérisée en outre en ce que la résine d'isocyanate est un biuret d'hexaméthylènediisocyanate, un trimère d'hexaméthylènediisocyanate ou une résine de diphénylméthanediisocyanate.

7. Utilisation d'une composition de peinture selon l'une quelconque des revendications 1 à 6, caractérisée en outre en ce que le catalyseur est le 2-éthylhexanoate de bismuth.

8. Utilisation selon l'une quelconque des revendications 1 à 7, caractérisée en ce que le "temps d'absence de traces d'automobiles" de la composition est de 90 secondes ou moins.